# EUROPÄISCHE PATENTSCHRIFT

(11) **EP 3 290 292 B1**
(45) Veröffentlichungstag und Bekanntmachung des Hinweises auf die Patenterteilung: **26.02.2020**
(21) Anmeldenummer: 17181850.3
(22) Anmeldetag: 18.07.2017
(51) Int. Cl.: B62D 5/04

(54) **VERFAHREN ZUM BETRIEB EINES ELEKTRISCHEN SERVOLENKSYSTEMS EINES KRAFTFAHRZEUGS UND ELEKTRISCHES SERVOLENKSYSTEM FÜR EIN KRAFTFAHRZEUG**
METHOD FOR OPERATING AN ELECTRIC POWER STEERING SYSTEM OF A MOTOR VEHICLE AND ELECTRIC POWER STEERING SYSTEM FOR A MOTOR VEHICLE
PROCÉDÉ DE FONCTIONNEMENT D'UN SYSTÈME DE DIRECTION ASSISTÉE ÉLECTRIQUE D'UN VÉHICULE AUTOMOBILE ET SYSTÈME DE DIRECTION ASSISTÉE ÉLECTRIQUE POUR UN VÉHICULE AUTOMOBILE

(30) Priorität: 29.08.2016 DE 102016216145
(43) Veröffentlichungstag der Anmeldung: 07.03.2018
(73) Patentinhaber: VOLKSWAGEN AKTIENGESELLSCHAFT, 38440 Wolfsburg (DE)
(72) Erfinder: Schäfer, Johannes Maria, 39615 Werben OT Berge (DE); Zientek, Jens, 39365 Sommersdorf (DE)

(56) Entgegenhaltungen:
- EP-B1- 2 061 691
- JP-A- H05 229 445

## Beschreibung

Die Erfindung betrifft ein Verfahren zum Betrieb eines elektrischen Servolenksystems eines Kraftfahrzeugs, ein elektrisches Servolenksystem für ein Kraftfahrzeug, ein Computerprogramm und ein Steuergerät eines Servolenksystems.

Nahezu alle modernen Kraftfahrzeuge sind mit einem elektrischen Servolenksystem ausgestattet, welches den Fahrer des Kraftfahrzeugs beim Lenken mittels einer Lenkunterstützung unterstützt. Bei diesen elektromechanischen Lenkungen wird das verwendete Fett bei niedrigen Temperaturen schwergängig, das heißt seine Viskosität nimmt zu. Hierdurch weist die gesamte Lenkung eine höhere innere Reibung auf. Aus dem Stand der Technik sind Verfahren bekannt, welche eine Erhöhung der inneren Reibung durch eine zusätzliche Rückstellkraft kompensieren.

Aus der DE 103 92 688 B4 ist ein Steuerverfahren für eine elektrische Servolenkung bekannt, wobei in eine elektronische Steuereinheit der elektrischen Servolenkung mindestens ein Parameter eingegeben und ausgewertet wird, der für eine Höhe einer am Fahrzeug herrschenden Temperatur repräsentativ ist, um einen automatischen Ausgleich der Veränderungen der mechanischen Eigenschaften der Servolenkung, umfassend die Schwankung des Reibungskoeffizienten bewegter Teile, in Abhängigkeit von der Betriebstemperatur sicherzustellen, wobei der Parameter aus einem Temperatursignal, das von einem Temperaturfühler geliefert wird, der sich an einem Teil des betreffenden Fahrzeugs außerhalb der Servolenkung befindet, oder aus einem Temperatursignal gebildet wird, das von einem Temperaturfühler geliefert wird, der sich an einem Teil des Lenkungssystems des betreffenden Fahrzeugs befindet, oder ein Signal ist, das aus einer Modellberechnung der Temperatur des mechanischen Teils der elektrischen Servolenkung stammt, wobei dieses Signal von einer elektronischen Steuereinheit der elektrischen Servolenkung berechnet wird, wobei die Steuereinheit den Parameter verarbeitet bzw. auswertet, um die Auswirkungen von Temperaturschwankungen auf die Servolenkung auszugleichen.

Eine ähnliche Vorrichtung ist aus der JP-H-O5229445 bekannt. Dieses Dokument ist als nächstliegender Stand der Technik betrachtet und entspricht dem Oberbegriff der Ansprüche 1 und 5.

Insbesondere soll die zusätzliche Rückstellkraft dafür sorgen, dass sich das Lenksystem nach einem Lenkvorgang auch bei erhöhter innerer Reibung selbständig wieder in eine Mittelstellung oder Geradeausstellung bzw. eine 0-Position drehen kann bzw. in diese zurückgeführt wird. Die zusätzliche Rückstellkraft wird hierzu beispielsweise von einem Servoantrieb bereitgestellt.

Bei den genannten Verfahren wird durch die zusätzliche Rückstellkraft neben der Kompensation der erhöhten inneren Reibung der Lenkung jedoch auch das Anlenkverhalten beeinflusst, so dass hierdurch ein Lenkgefühl für den Fahrer verfälscht wird.

Der Erfindung liegt das technische Problem zu Grunde, ein Verfahren zum Betrieb eines elektrischen Servolenksystems eines Kraftfahrzeugs, ein elektrisches Servolenksystem für ein Kraftfahrzeug, ein Computerprogramm und ein Steuergerät eines Servolenksystems zu schaffen, bei dem das Lenkgefühl verbessert ist.

Die technische Aufgabe wird erfindungsgemäß durch ein Verfahren mit den Merkmalen des Patentanspruchs 1, ein elektrisches Servolenksystem mit den Merkmalen des Patentanspruchs 5, ein Computerprogramm mit den Merkmalen des Patentanspruchs 9 und ein Steuergerät für ein Servolenksystem mit den Merkmalen des Patentanspruchs 10 gelöst. Vorteilhafte Ausgestaltungen der Erfindung ergeben sich aus den Unteransprüchen.

Insbesondere wird ein Verfahren zum Betrieb eines elektrischen Servolenksystems eines Kraftfahrzeugs zur Verfügung gestellt, bei dem mittels einer Lenkhandhabe ein Lenkradwinkel als Maß für einen gewünschten Radlenkwinkel für mindestens ein lenkbares Rad des Kraftfahrzeugs vorgegeben wird, wobei ein elektrischer Servoantrieb mit einem Elektromotor eine Lenkunterstützung bereitstellt, und wobei zur Kompensation einer erhöhten inneren Reibung des Servolenksystems temperaturabhängig eine zusätzliche Rückstellkraft bereitgestellt wird, wobei die zusätzliche Rückstellkraft in Abhängigkeit eines an der Lenkhandhabe erfassten Lenkwunsches verringert wird.

Ferner wird ein elektrisches Servolenksystem für ein Kraftfahrzeug geschaffen, umfassend eine Lenkhandhabe zur Vorgabe eines Lenkradwinkels als Maß für einen gewünschten Radlenkwinkel für mindestens ein lenkbares Rad des Kraftfahrzeugs, einen elektrischen Servoantrieb mit einem Elektromotor zum Bereitstellen einer Lenkunterstützung, und ein elektronisches Steuergerät für den elektrischen Servoantrieb, wobei das elektronische Steuergerät derart ausgebildet ist, zur Kompensation einer erhöhten inneren Reibung des Servolenksystems temperaturabhängig den elektrischen Servoantrieb zu veranlassen, eine zusätzliche Rückstellkraft bereitzustellen, wobei das elektronische Steuergerät ferner derart ausgebildet ist, die zusätzliche Rückstellkraft in Abhängigkeit eines an der Lenkhandhabe erfassten Lenkwunsches zu verringern.

Weiter wird ein Computerprogramm mit Programmcodemitteln geschaffen, um das beschriebene Verfahren durchzuführen, wenn das Programm auf einem Mikroprozessor eines Computers, insbesondere auf einem Steuergerät eines Servolenksystems, ausgeführt wird.

Zugleich wird ein Steuergerät eines Servolenksystems zur Verfügung gestellt, eingerichtet zur Durchführung des beschriebenen Verfahrens oder zur Ausführung eines Computerprogramms der vorgenannten Art.

Die Kernidee der Erfindung ist, die zur Kompensation der erhöhten inneren Reibung des Lenksystems bereitgestellte zusätzliche Rückstellkraft bei Erkennen eines Lenkwunsches des Fahrers zu reduzieren. Der Lenkwunsch kann beispielsweise über eine entsprechende Sensorik an dem Lenksystem, beispielsweise über einen Torsionsstab, erfasst werden und erzeugte Messsignale von dem Steuergerät ausgewertet und erkannt werden. Das Steuergerät verringert dann die zusätzliche Rückstellkraft durch entsprechende Ansteuerung des Servoantriebs.

Der Vorteil der Erfindung ist, dass sich an der Lenkhandhabe, beispielsweise einem Lenkrad, ein haptisches Verhalten erzeugen lässt, welches dem der Lenkung bei Normalbetrieb (normale Temperaturen) entspricht, wobei die Kompensation der inneren Reibung trotzdem in vollem Umfang gewährleistet ist.

Insbesondere kann vorgesehen sein, dass das beschriebene Verfahren nur dann durchgeführt wird, wenn überhaupt eine zusätzliche Rückstellkraft bereitgestellt wird oder aktiviert ist. Herrschen beispielsweise normale Temperaturen, das heißt Temperaturen, bei denen die Viskosität der verwendeten Fette oder Schmiermittel nicht beeinträchtigt sind, so wird das Verfahren nicht durchgeführt.

In einer Ausführungsform ist vorgesehen, dass das Verringern der zusätzlichen Rückstellkraft in Abhängigkeit einer handmomentabhängigen Kennlinie durchgeführt wird. Dies ermöglicht es, die zusätzliche Rückstellkraft auf Grundlage eines an der Lenkhandhabe erfassten Handmoments gezielt zu verringern. So kann beispielsweise vorgesehen sein, dass die zur Kompensation der inneren Reibung bereitgestellte zusätzliche Rückstellkraft bei größeren von dem Fahrer aufgebrachten Handmomenten stark verringert oder sogar vollständig reduziert wird, bei kleineren Handmomenten jedoch lediglich ein wenig verringert wird.

In einer weiteren Ausführungsform ist vorgesehen, dass das Verringern der zusätzlichen Rückstellkraft in Abhängigkeit einer Lenkrichtung durchgeführt wird. Die Lenkrichtung soll hierbei bezeichnen, ob von einer 0-Position weggelenkt oder zur 0-Position hingelenkt wird. Dies ist insbesondere von Vorteil wenn das Verringern der zusätzlichen Rückstellkraft für unterschiedliche Lenkrichtungen unterschiedlich sein soll.

Insbesondere ist in einer Ausführungsform vorgesehen, dass die zusätzliche Rückstellkraft beim Weglenken aus der 0-Position stärker verringert wird als beim Hinlenken zur 0-Position. Auf diese Weise kann erreicht werden, dass ein Fahrer, der entgegen der Rückstellrichtung des Lenksystems anlenkt, nicht noch gegen die zusätzliche Rückstellkraft anlenken muss. Lenkt der Fahrer hingegen in Rückstellrichtung, das heißt zur 0-Position hin, so kann die zusätzliche Rückstellkraft weniger stark verringert werden.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform eines elektrischen Servolenksystem für ein Kraftfahrzeug;
- Fig. 2: eine schematische Darstellung eines Signalflussdiagramms zur Verdeutlichung der Erfindung;
- Fig. 3: eine schematische Darstellung einer handmomentabhängigen Kennlinie der zusätzlichen Rückstellkraft;
- Fig. 4: eine schematische Darstellung einer handmomentabhängigen Kennlinie der zusätzlichen Rückstellkraft mit Lenkrichtungsabhängigkeit;
- Fig. 5: ein schematisches Ablaufdiagramm einer Ausführungsform des Verfahrens zum Betrieb eines elektrischen Servolenksystems eines Kraftfahrzeugs.

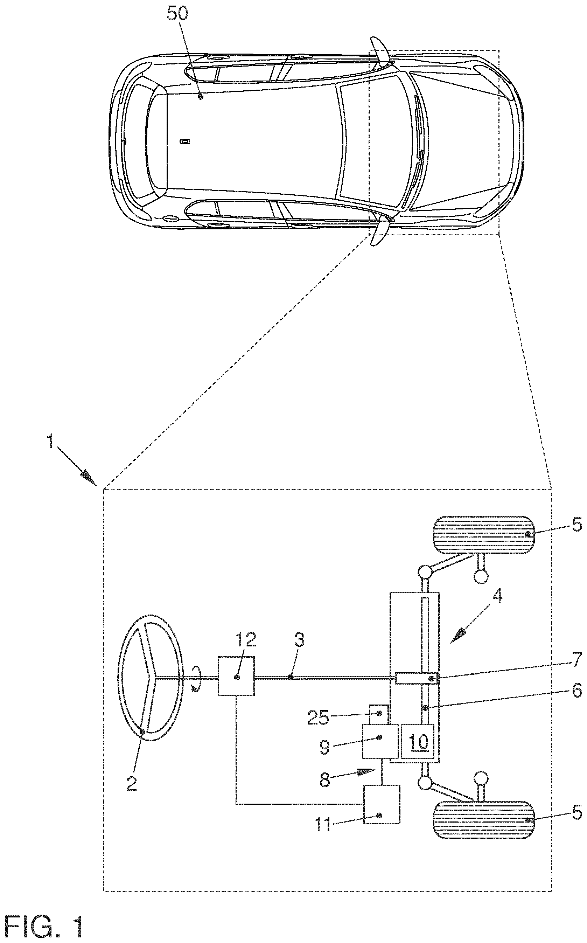

Fig. 1 zeigt eine schematische Darstellung einer Ausführungsform eines elektrischen Servolenksystems 1 für ein Kraftfahrzeug 50. Das elektrische Servolenksystem 1 weist eine als Lenkrad ausgebildete Lenkhandhabe 2 auf. Die Lenkhandhabe 2 ist über eine Lenksäule 3 mit einem Lenkgetriebe 4 verbunden. Das Lenkgetriebe 4 dient dazu, einen Drehwinkel der Lenksäule 3 in einen Lenkwinkel von lenkbaren Rädern 5 des Kraftfahrzeugs 50 umzusetzen. Das Lenkgetriebe 4 weist hierzu eine Zahnstange 6 und eine Ritzel 7 auf, an welches die Lenksäule 3 angreift. Ferner weist das elektrische Servolenksystem 1 einen elektrischen Servoantrieb 8 mit einem Elektromotor 9 auf, welcher zum Aufbringen eines Unterstützungsmoments über ein Riemengetriebe 10 dient. Das Riemengetriebe 10 weist ein Antriebsritzel und eine Riemenscheibe zur Übertragung des Unterstützungsmoments über ein Kugelumlaufgetriebe (in Fig. 1 nicht dargestellt) auf die Zahnstange 6 des elektrischen Servolenksystems 1 auf. Des Weiteren ist ein elektronisches Steuergerät 11 zur Ansteuerung und Regelung des Elektromotors 9 vorgesehen.

Der Aufbau des hier gezeigten elektrischen Servolenksystems 1 ist lediglich beispielhaft. Das elektrische Servolenksystem 1 kann prinzipiell auch anders aufgebaut sein, beispielsweise in Form einer Double Pinion-Lenkung.

Das elektrische Servolenksystem 1 ist nun derart ausgebildet, zur Kompensation einer erhöhten inneren Reibung des Servolenksystems 1 temperaturabhängig eine zusätzliche Rückstellkraft bereitzustellen. Die zusätzliche Rückstellkraft soll dafür sorgen, dass sich das elektrische Servolenksystem 1 nach einem Lenkvorgang auch bei erhöhter innerer Reibung selbständig wieder in eine 0-Position (Mittelstellung) drehen kann bzw. in diese zurückgeführt wird. Hierzu wird beispielsweise eine Temperatur an oder in der Nähe des Servolenksystems 1 von einem Temperatursensor 25 erfasst, ausgewertet und dem Steuergerät 11 als Eingangsgröße zugeführt. Herrschen beispielsweise Temperaturen, welche unterhalb eines vorgegebenen Grenzwertes liegen, so kann die zusätzliche Rückstellkraft von dem Steuergerät 11 zugeschaltet werden. Der Servoantrieb 8 stellt dann die zusätzliche Rückstellkraft in Form eines zusätzlichen Moments bereit. Wird nun an der Lenkhandhabe 2 ein Lenkwunsch des Fahrers erkannt, so wird die zusätzliche Rückstellkraft in Abhängigkeit einer Lenkrichtung wieder verringert. Zum Erkennen des Lenkwunsches werden dem Steuergerät 11 Daten einer Sensorik 12 zugeführt und in dem Steuergerät 11 ausgewertet. Über die Sensorik 12, beispielsweise einem Torsionsstab, wird hierzu beispielsweise ein Handmoment an der Lenkhandhabe 2 erfasst und in entsprechende Sensordaten umgewandelt. Überschreitet das erfasste Handmoment einen bestimmten Wert, so fasst das Steuergerät 11 dies als Lenkwunsch des Fahrers auf.

Es kann hierbei vorgesehen sein, dass das Verringern der zusätzlichen Rückstellkraft in Abhängigkeit einer handmomentabhängigen Kennlinie durchgeführt wird.

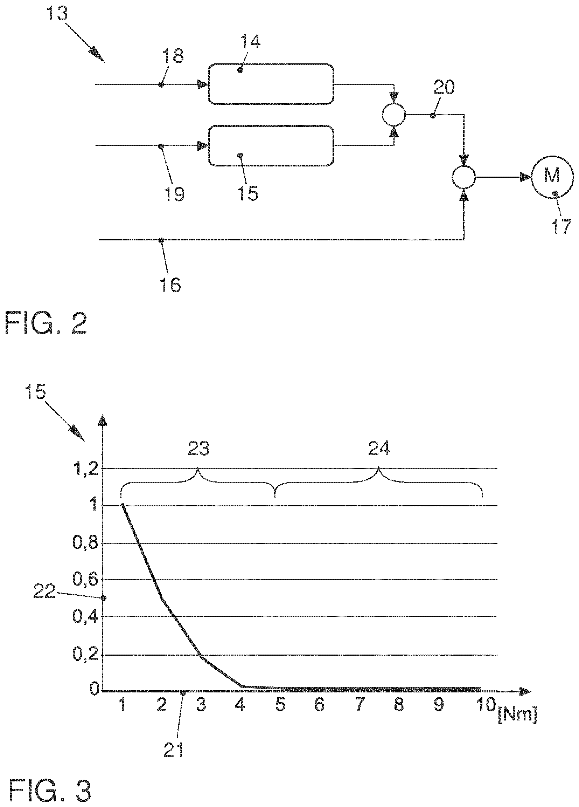

In Fig. 2 ist eine schematische Darstellung eines Signalflussdiagramms 13 zur Verdeutlichung der Erfindung dargestellt. Eine auf diesem Signalflussdiagramms 13 basierende Schaltung ist beispielsweise im Steuergerät 11 (Fig. 1) umgesetzt. Der Wert für das gesamte Unterstützungsmoment 17 ergibt sich zu einem Anteil aus dem normalen Unterstützungsmoment 16 und zu einem Anteil aus der zusätzlichen Rückstellkraft 20. Die zusätzliche Rückstellkraft 20 ergibt sich aus einem Temperaturkompensationsmoment 14, welches gemäß dem beschriebenen Verfahren in Abhängigkeit eines an der Lenkhandhabe erfassten Lenkwunsches über eine handmomentabhängige Kennlinie 15 verringert wird.

In Fig. 3 ist eine schematische Darstellung einer solchen handmomentabhängigen Kennlinie 15 der zusätzlichen Rückstellkraft dargestellt. Hierbei ist auf der x-Achse das Handmoment 21 in Nm dargestellt. Dieses Handmoment 21 wird beispielsweise an einer entsprechenden Sensorik an der Lenkhandhabe oder der Lenksäule erfasst. Auf der y-Achse ist ein Faktor 22 dargestellt, mit dem ein Maximalwert für die zusätzliche Rückstellkraft multipliziert wird. Der Verlauf der handmomentabhängigen Kennlinie 15 ist abfallend, das heißt mit steigendem Handmoment 21 verringert sich der Faktor 22 und somit auch die bereitgestellte zusätzliche Rückstellkraft.

Die handmomentabhängige Kennlinie 15 weist beispielsweise zwei Abschnitte 23, 24 auf. Im ersten Abschnitt 23 fällt der Faktor 22 von 1, das heißt hier wirkt die volle zusätzliche Rückstellkraft, auf 0 im zweiten Abschnitt 24 ab. Im zweiten Abschnitt 24 wird somit keine zusätzliche Rückstellkraft bereitgestellt. Anschaulich sagt diese handmomentabhängige Kennlinie 15 aus, dass je größer das von dem Fahrer aufgebrachte Handmoment 21 ist, desto stärker wird die zusätzliche Rückstellkraft wieder verringert.

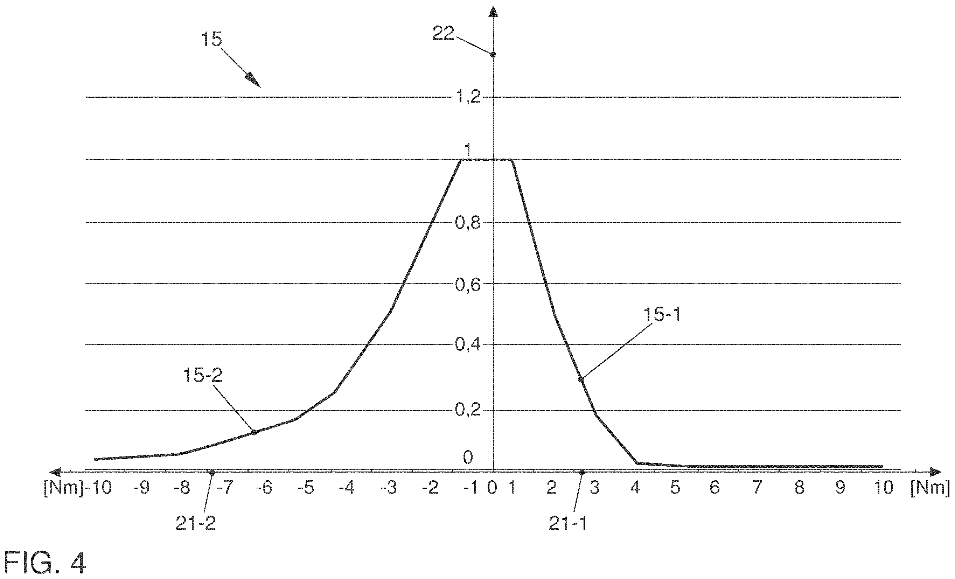

In Fig. 4 ist eine schematische Darstellung einer weiteren handmomentabhängigen Kennlinie der zusätzlichen Rückstellkraft dargestellt, wobei hier eine Lenkrichtungsabhängigkeit der Kennlinie vorliegt. Gleiche Bezugszeichen bezeichnen gleiche Begriffe und Merkmale. Auf der x-Achse sind nun das Handmoment 21-1 in Richtung weg von der 0-Position und das Handmoment 21-2 in Richtung zur 0-Position, wiederum in der Einheit Nm, gezeigt. Es kann beispielsweise vorgesehen sein, dass ein erster Teil 15-1 der handmomentabhängigen Kennlinie 15 für ein Handmoment 21-1 weg von der 0-Position stärker abfällt als ein anderer Teil 15-2 der handmomentabhängigen Kennlinie 15, welcher wesentlich langsamer mit dem Handmoment 21-2 in Richtung zur 0-Position abfällt. Somit kann erreicht werden, dass die zusätzliche Rückstellkraft beim Weglenken aus der 0-Position stärker verringert wird als beim Hinlenken in die 0-Position. Eine solche Kennlinie 15 ist insbesondere von Vorteil, wenn gegen die zusätzliche Rückstellkraft, das heißt von der 0-Position weg, angelenkt werden soll. In diesem Fall müsste neben der erhöhten inneren Reibung des Lenksystems zusätzlich noch gegen die zusätzliche Rückstellkraft angelenkt werden, was den Lenkvorgang zusätzlich erschweren würde und ein Lenkgefühl des Fahrers erheblich beeinträchtigen würde.

Die dargestellten Kennlinien 15 sind lediglich als Beispiele zu verstehen und können auch einen anderen Verlauf aufweisen.

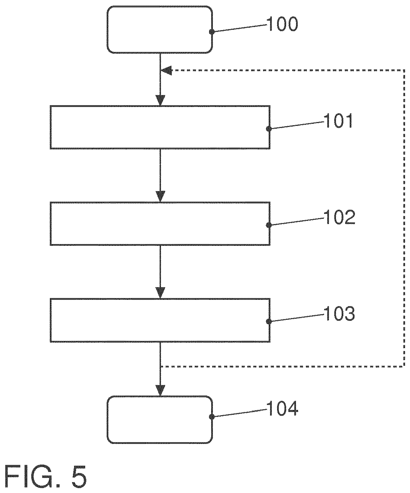

In Fig. 5 ist ein schematisches Ablaufdiagramm einer Ausführungsform des Verfahrens zum Betrieb eines elektrischen Servolenksystems eines Kraftfahrzeuges gezeigt. Nach dem Start 100 des Verfahrens wird in einem ersten Verfahrensschritt 101 eine temperaturabhängige zusätzliche Rückstellkraft zur Kompensation einer erhöhten inneren Reibung des Servolenksystems bereitgestellt.

Im Verfahrensschritt 102 wird ein Lenkwunsch des Fahrers des Kraftfahrzeuges an der Lenkhandhabe erkannt und dem Steuergerät zugeführt. In Abhängigkeit des erfassten Lenkwunsches wird die zusätzliche Rückstellkraft im Verfahrensschritt 103 wieder verringert. Hierbei kann insbesondere vorgesehen sein, dass das Verringern der zusätzlichen Rückstellkraft in Abhängigkeit einer handmomentabhängigen Kennlinie durchgeführt wird. Insbesondere kann vorgesehen sein, dass die handmomentabhängige Kennlinie auch eine Lenkrichtung hin oder weg von einer 0-Position berücksichtigt. Beispielsweise kann auf diese Weise erreicht werden, dass die zusätzliche Rückstellkraft beim Weglenken von der 0-Position stärker verringert wird als beim Hinlenken zur 0-Position.

Das beschriebene Verfahren wird beispielsweise in einem elektrischen Servolenksystem für ein Kraftfahrzeug umgesetzt. Hierbei kann insbesondere vorgesehen sein, dass das beschriebene Verfahren in einem Steuergerät des Servolenksystems umgesetzt wird. Hierzu wird in dem Steuergerät ein Computerprogramm mit Programmcodemitteln ausgeführt, welches das beschriebene Verfahren durchführt.

Anschließend ist das Verfahren beendet 104. Es kann ferner vorgesehen sein, dass die Verfahrensschritte 101, 102, 103 zyklisch wiederholt werden.

**Bezugszeichenliste**

| | | | |
|---|---|---|---|
| 1 | Servolenksystem | 16 | normales Unterstützungsmoment |
| 2 | Lenkhandhabe | 17 | gesamtes Unterstützungsmoment |
| 3 | Lenksäule | 18 | Temperatur |
| 4 | Lenkgetriebe | 19 | Handmoment |
| 5 | Rad | 20 | zusätzliche Rückstellkraft |
| 6 | Zahnstange | 21 | Handmoment |
| 7 | Ritzel | 21-1 | Handmoment in Richtung weg von der 0-Position |
| 8 | Servoantrieb | | |
| 9 | Elektromotor | 21-2 | Handmoment in Richtung zur 0-Position |
| 10 | Getriebe | | |
| 11 | Steuergerät | 22 | Faktor |
| 12 | Sensorik | 23 | Abschnitt |
| 13 | Signalflussdiagramm | 24 | Abschnitt |
| 14 | Temperaturkompensationsmoment | 25 | Temperatursensor |
| 15 | Handmomentabhängige Kennlinie | 26 | |
| 15-1 | Teil der handmomentabhängigen Kennlinie | 50 | Kraftfahrzeug |
| 15-2 | Teil der handmomentabhängigen Kennlinie | 100-104 | Verfahrensschritt |

## Patentansprüche

1. Verfahren zum Betrieb eines elektrischen Servolenksystems (1) eines Kraftfahrzeugs (50), bei dem mittels einer Lenkhandhabe (2) ein Lenkradwinkel als Maß für einen gewünschten Radlenkwinkel für mindestens ein lenkbares Rad (5) des Kraftfahrzeugs (50) vorgegeben wird, wobei ein elektrischer Servoantrieb (8) mit einem Elektromotor (9) eine Lenkunterstützung bereitstellt, und wobei zur Kompensation einer erhöhten inneren Reibung des Servolenksystems (1) temperaturabhängig eine zusätzliche Rückstellkraft (20) bereitgestellt wird,
**dadurch gekennzeichnet, dass**
die zusätzliche Rückstellkraft (20) in Abhängigkeit eines an der Lenkhandhabe (2) erfassten Lenkwunsches verringert wird.

2. Verfahren nach Anspruch 1, **dadurch gekennzeichnet, dass** das Verringern der zusätzlichen Rückstellkraft (20) in Abhängigkeit einer handmomentabhängigen Kennlinie (15, 15-1, 15-2) durchgeführt wird.

3. Verfahren nach einem der vorangehenden Ansprüche, **dadurch gekennzeichnet, dass** das Verringern der zusätzlichen Rückstellkraft (20) in Abhängigkeit einer Lenkrichtung durchgeführt wird.

4. Verfahren nach Anspruch 3, **dadurch gekennzeichnet, dass** die zusätzliche Rückstellkraft (20) beim Weglenken aus einer 0-Position stärker verringert wird als beim Hinlenken zur 0-Position.

5. Elektrisches Servolenksystem (1) für ein Kraftfahrzeug (50), umfassend:
eine Lenkhandhabe (2) zur Vorgabe eines Lenkradwinkels als Maß für einen gewünschten Radlenkwinkel für mindestens ein lenkbares Rad (5) des Kraftfahrzeugs (50),
einen elektrischen Servoantrieb (8) mit einem Elektromotor (9) zum Bereitstellen einer Lenkunterstützung, und
ein elektronisches Steuergerät (11) für den elektrischen Servoantrieb (8),
wobei das elektronische Steuergerät (11) derart ausgebildet ist, zur Kompensation einer erhöhten inneren Reibung des Servolenksystems (1) temperaturabhängig den elektrischen Servoantrieb (8) zu veranlassen, eine zusätzliche Rückstellkraft (20) bereitzustellen,
**dadurch gekennzeichnet, dass**
das elektronische Steuergerät (11) ferner derart ausgebildet ist, die zusätzliche Rückstellkraft (20) in Abhängigkeit eines an der Lenkhandhabe (2) erfassten Lenkwunsches zu verringern.

6. Elektrisches Servolenksystem (1) nach Anspruch 5, **dadurch gekennzeichnet, dass** das elektronische Steuergerät (11) derart ausgebildet ist, das Verringern der zusätzlichen Rückstellkraft (20) in Abhängigkeit einer handmomentabhängigen Kennlinie (15, 15-1, 15-2) durchzuführen.

7. Elektrisches Servolenksystem (1) nach Anspruch 5 oder 6, **dadurch gekennzeichnet, dass** das elektronische Steuergerät (11) derart ausgebildet ist, das Verringern der zusätzlichen Rückstellkraft (20) in Abhängigkeit einer Lenkrichtung durchzuführen.

8. Elektrisches Servolenksystem (1) nach Anspruch 7, **dadurch gekennzeichnet, dass** das elektronische Steuergerät (11) derart ausgebildet ist, die zusätzliche Rückstellkraft (20) beim Weglenken aus der 0-Position stärker zu verringern als beim Hinlenken zur 0-Position.

9. Computerprogramm mit Programmcodemitteln, um ein Verfahren gemäß einem der Ansprüche 1 bis 4 durchzuführen, wenn das Programm auf einem Mikroprozessor eines Computers, insbesondere auf einem Steuergerät eines Servolenksystems, ausgeführt wird.

10. Steuergerät (11) eines Servolenksystems, eingerichtet zur Durchführung eines Verfahrens nach einem der Ansprüche 1 bis 4 oder zur Ausführung eines Computerprogramms nach Anspruch 9.

## Claims

1. Method for operating an electric power steering system (1) of a motor vehicle (50), in which a steering handle (2) is used to specify a steering wheel angle as a measure of a desired wheel steering angle for at least one steerable wheel (5) of the motor vehicle (50), wherein an electric servo drive (8) with an electric motor (9) provides steering assistance, and wherein an additional restoring force (20) is provided to compensate for increased internal friction of the power steering system (1), depending on the temperature,
**characterised in that**
the additional restoring force (20) is reduced as a function of a steering request recorded on the steering handle (2).

2. Method according to claim 1, **characterised in that** the additional restoring force (20) is reduced as a function of a manual torque-dependent characteristic curve (15, 15-1, 15-2).

3. Method according to any one of the preceding claims, **characterised in that** the additional restoring force (20) is reduced as a function of a steering direction.

4. Method according to claim 3, **characterised in that** the additional restoring force (20) is reduced more when steering away from a 0 position than when steering towards the 0 position.

5. Electric power steering system (1) for a motor vehicle (50), comprising:
a steering handle (2) for specifying a steering wheel angle as a measure of a desired wheel steering angle for at least one steerable wheel (5) of the motor vehicle (50),
an electric servo drive (8) with an electric motor (9) to provide steering assistance, and
an electronic control unit (11) for the electric servo drive (8),
wherein the electronic control unit (11) is designed such that an additional restoring force (20) is provided to cause the electric servo drive (8) to compensate for an increased internal friction of the power steering system (1), depending on the temperature,
**characterised in that**
the electronic control unit (11) is also designed to reduce the additional restoring force (20) as a function of a steering request recorded on the steering handle (2).

6. Electric power steering system (1) according to claim 5, **characterised in that** the electronic control unit (11) is designed such that the additional restoring force (20) is to be reduced as a function of a manual torque-dependent characteristic curve (15, 15-1, 15-2).

7. Electric power steering system (1) according to claim 5 or 6, **characterised in that** the electronic control unit (11) is designed such that the additional restoring force (20) is to be reduced as a function of a steering direction.

8. Electric power steering system (1) according to claim 7, **characterised in that** the electronic control unit (11) is designed such that the additional restoring force (20) is reduced more when steering away from the 0 position than when steering towards the 0 position.

9. Computer program with program code means to carry out a method according to any one of claims 1 to 4 when the program is executed on a microprocessor of a computer, in particular on a control unit of a power steering system.

10. Control unit (11) of a power steering system, set up to carry out a method according to any one of claims 1 to 4 or to execute a computer program according to claim 9.

## Revendications

1. Procédé permettant de faire fonctionner le système de direction assistée électrique (1) d'une automobile (50), dans laquelle l'angle d'inclinaison du volant est défini au moyen d'une commande manuelle de direction (2) comme mesure de l'angle de direction de roue souhaité pour au moins une roue directrice (5) de l'automobile (50), où un
servo-entraînement électrique (8) avec un moteur électrique (9) assure l'assistance de direction, et dans laquelle une force de rappel supplémentaire (20) est fournie en fonction de la température pour compenser le friction interne accrue du système de direction assistée (1),
**caractérisée en ce que**
la force de rappel supplémentaire (20) est réduite en fonction du mouvement de braquage du volant détectée sur la commande manuelle de direction (2).

2. Procédé selon la revendication 1, **caractérisé en ce que** la réduction de la force de rappel supplémentaire (20) est effectuée en fonction d'une courbe caractéristique dépendant du couple manuel (15, 15-1, 15-2) .

3. Procédé selon l'une quelconque des revendications précédentes, **caractérisé en ce que** la réduction de la force de rappel supplémentaire (20) est effectuée en fonction d'une direction.

4. Procédé selon la revendication 3, **caractérisé en ce que** la force de rappel supplémentaire (20) est fortement réduite lors du braquage à partir d'une position 0 que lors du braquage vers la position 0.

5. Système de direction assistée électrique (1) pour une automobile (50) comprenant :
une commande manuelle de direction (2) pour la définition de l'angle d'inclinaison du volant comme mesure de l'angle de direction de roue souhaité pour au moins une roue directrice (5) de l'automobile (50),
un servo-entraînement électrique (8) avec un moteur électrique (9) pour assurer une assistance de direction, et
une unité de commande électronique (11) pour le servo-entraînement électrique (8),
l'unité de commande électronique (11) étant conçue de manière à ce que
le servo-entraînement électrique (8) fournisse une force de rappel supplémentaire (20) afin de compenser le friction interne accrue du système de direction assistée (1) en fonction de la température, **caractérisée en ce que**
l'unité de commande électronique (11) est également conçue de manière à réduire la force de rappel supplémentaire (20) en fonction du mouvement de braquage du volant détectée sur la commande manuelle de direction (2).

6. Système de direction assistée électrique (1) selon la revendication 5, **caractérisé en ce que** l'unité de commande électronique (11) est conçue de manière à effectuer la réduction de la force de rappel supplémentaire (20) en fonction d'une caractéristique dépendant du couple manuel (15, 15-1, 15-2).

7. Système de direction assistée électrique (1) selon la revendication 5 ou 6, **caractérisé en ce que** l'unité de commande électronique (11) est conçue de manière à effectuer la réduction de la force de rappel supplémentaire (20) en fonction d'une direction.

8. Système de direction assistée électrique (1) selon la revendication 7, **caractérisé en ce que** l'unité de commande électronique (11) est conçue de manière à réduire la force de rappel supplémentaire (20) est fortement réduite lors du braquage à partir d'une position 0 que lors du braquage vers la position 0.

9. Programme informatique avec système de code pour la mise en œuvre d'un procédé selon l'une quelconque des revendications 1 à 4 lorsque le programme est exécuté sur un microprocesseur d'un ordinateur, en particulier sur une unité de commande d'un système de direction assistée.

10. Unité de commande (11) d'un système de direction assistée conçue pour mettre en œuvre un procédé selon l'une quelconque des revendications 1 à 4 ou pour exécuter un programme informatique selon la revendication 9.
